# EUROPÄISCHE PATENTSCHRIFT

(11) **EP 2 001 704 B1**
(45) Veröffentlichungstag und Bekanntmachung des Hinweises auf die Patenterteilung: **28.10.2009**
(21) Anmeldenummer: 07711612.7
(22) Anmeldetag: 21.02.2007
(51) Int. Cl.: B60N 2/225

(54) **BESCHLAG FÜR EINEN FAHREZUGSITZ**
FITTING FOR A VEHICLE SEAT
MÉCANISME POUR UN SIÈGE DE VÉHICULE

(30) Priorität: 04.04.2006 DE 102006015559
(43) Veröffentlichungstag der Anmeldung: 17.12.2008
(73) Patentinhaber: KEIPER GmbH & Co. KG, 67657 Kaiserslautern (DE)
(72) Erfinder: EPPERT, Dietmar, 42857 Remscheid (DE); FINNER, Holger, 42499 Hückeswagen (DE); LEHMAN, Ulrich, 53347 Alfter (DE); SCHOLZ, Grit, 42853 Remscheid (DE); VEDDER, Andreas, 42781 Haan (DE); VOSSMANN, Gregor, 48691 Vreden (DE); BUSCH, Heinrich, 42855 Remscheid (DE)
(74) Vertreter: Patentanwälte Hosenthien-Held und Dr. Held
(86) Internationale Anmeldenummer: PCT/EP2007/001485
(87) Internationale Veröffentlichungsnummer: WO 2007/115602

(56) Entgegenhaltungen:
- WO-A-03/024740
- DE-A1- 3 529 887

## Beschreibung

Die Erfindung betrifft einen Beschlag für einen Fahrzeugsitz, insbesondere für einen Kraftfahrzeugsitz, mit den Merkmalen des Oberbegriffs des Anspruches 1.

Aus der DE 35 29 887 C2 ist ein Beschlag dieser Art bekannt, welcher für einen Gurtintegralsitz auf der Fahrzeugsitzseite mit dem Anbindungspunkt des Sicherheitsgurtes vorgesehen ist. Ein solcher Beschlag kann zwar die Kräfte im Crashfall sicher weiterleiten, ist jedoch für den Normalbetrieb hinsichtlich Spielfreiheit, Wirkungsgrad und Bauraum verbesserungsfähig.

Der Erfindung liegt die Aufgabe zu Grunde, einen Beschlag der eingangs genannten Art zu verbessern. Diese Aufgabe wird erfindungsgemäß durch einen Beschlag mit den Merkmalen des Anspruches 1 gelöst. Vorteilhafte Ausgestaltungen sind Gegenstand der Unteransprüche.

Indem der erste Einzelbeschlag einen Exzenter ohne Spielfreistellung und der zweite Einzelbeschlag einen Exzenter mit Spielfreistellung aufweist, kann der erste Einzelbeschlag hinsichtlich des Wirkungsgrades beim Verstellen des Beschlags und der Herstellungskosten und der zweite Einzelbeschlag hinsichtlich der Spielfreiheit beim Feststellen des Beschlags optimiert werden, was bei einem Einzelbeschlag alleine oder zwei gleichen Beschlägen nicht gleichzeitig möglich ist.

Bis auf die Exzenter sind vorzugsweise Gleichteile und/oder gemeinsame Bauteile vorgesehen, beispielsweise ein gemeinsamer Mitnehmer, der axial entsprechend lang gebaut ist, um beidseitig gelagert werden zu können. Ein mehrteilig aus Mitnehmerbuchse und Mitnehmerring bestehender Mitnehmer kann aus verschiedenen Materialen hergestellt werden, was für einen motorischen Antrieb von Vorteil ist.

Bei einer bevorzugten Scheibenform der Beschlagteile kann der Beschlag auf einfache Weise als vormontierte Einheit geschaffen werden, wobei vorzugsweise eine - beispielsweise durch Lasergeschweißen erzeugte - Transportsicherung für eine erste Verbindung der Einzelbeschläge sorgt, die dann durch die Anbringung der Adapter gefestigt wird, wobei die an die Scheibenform angepasste Geometrie der Adapter sehr einfach gestaltet werden kann.

Der erfindungsgemäße Beschlag wird bevorzugt zur Neigungseinstellung der Lehne verwendet, beispielsweise bei einem Einzelsitz, insbesondere Gurtintegralsitz, oder bei einer Rücksitzanlage mit geteilter (40% / 60%) Lehne in zweiter oder dritter Sitzreihe, kann aber auch anderweitig als Antrieb im Fahrzeugsitz eingesetzt werden, beispielsweise für einen Höheneinsteller oder Neigungseinsteller des Sitzkissens.

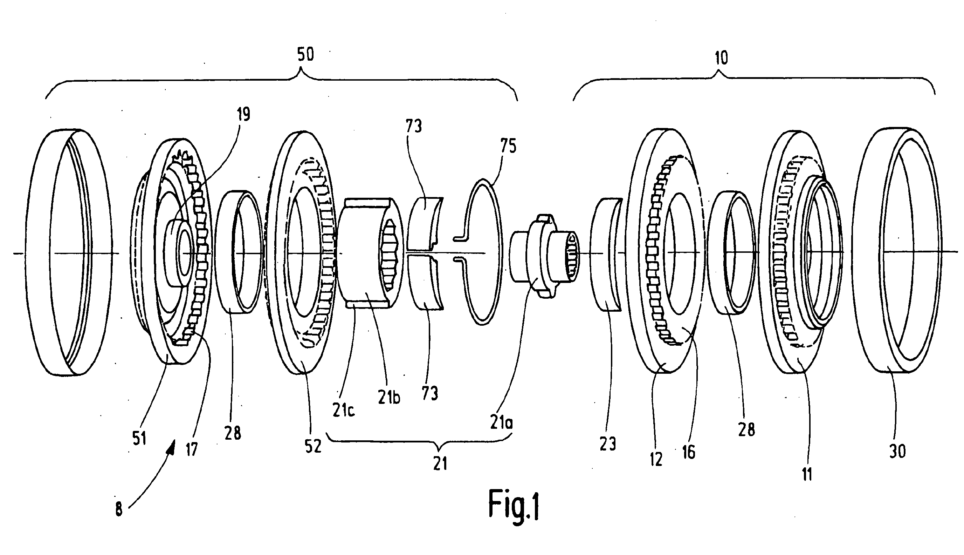

Im folgenden ist die Erfindung anhand eines in der Zeichnung dargestellten Ausführungsbeispiels näher erläutert. Es zeigen
- Fig. 1: eine Explosionsdarstellung des Beschlags des Ausführungsbeispiels ohne Adapter,

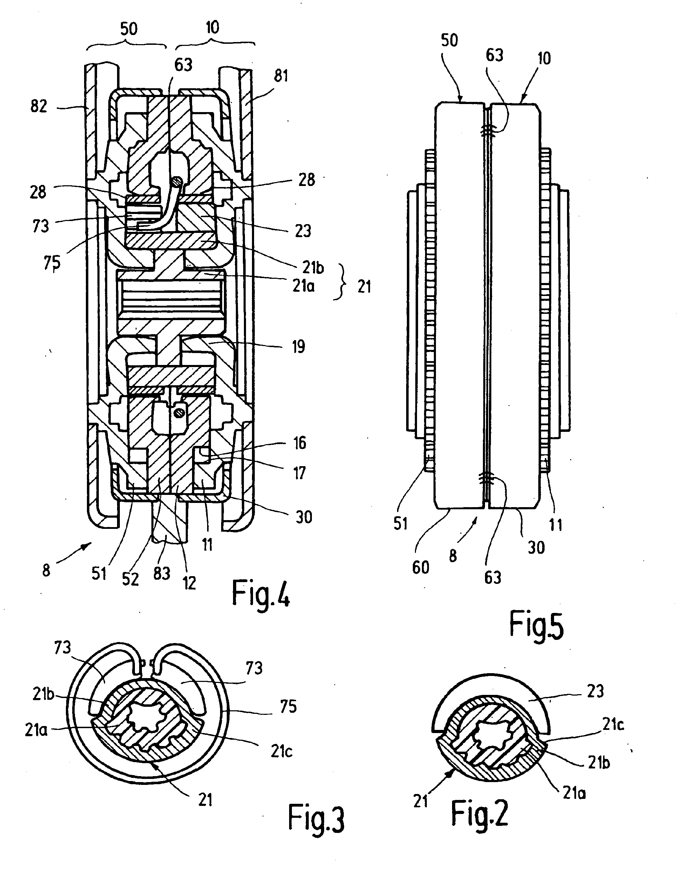

- Fig. 2: einen Schnitt durch den Exzenter des ersten Einzelbeschlags senkrecht zur axialen Richtung,
- Fig. 3: einen Schnitt durch den Exzenter des zweiten Einzelbeschlags senkrecht zur axialen Richtung,
- Fig. 4: einen Schnitt durch den Beschlag entlang der axialen Richtung,
- Fig. 5: eine Seitenansicht des Beschlags,

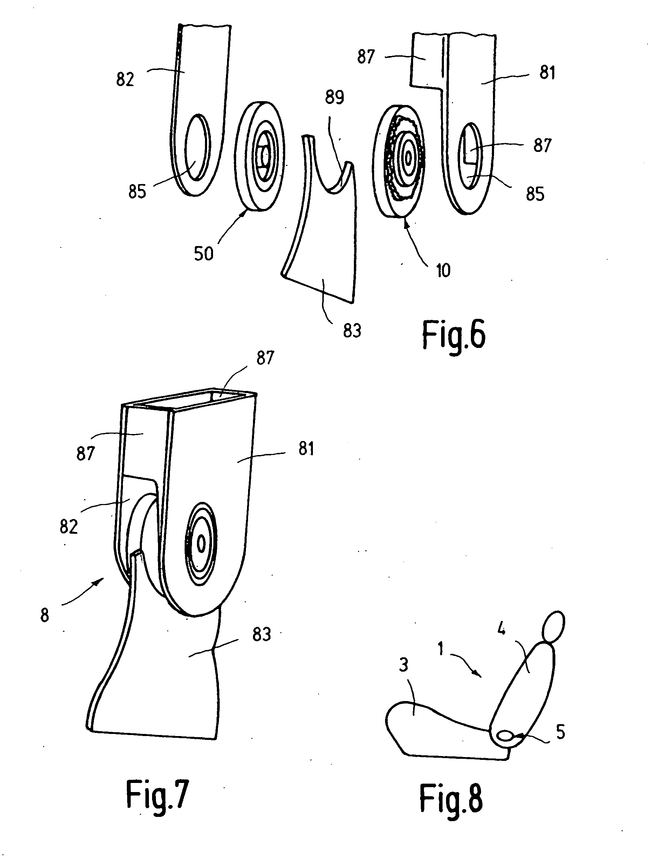

- Fig. 6: eine Explosionsdarstellung des Beschlags mit zusammengebauten Einzelbeschlägen, ohne Transportsicherung, und mit Adapter,
- Fig. 7: eine perspektivische Ansicht des Beschlags samt Adapter, und
- Fig. 8: einen schematisierten Fahrzeugsitz.

Ein Fahrzeugsitz 1 eines Kraftfahrzeuges weist ein Sitzteil 3 und eine Lehne 4 auf, welche mittels einer Beschlagsanordnung 5 am Sitzteil angebracht und relativ zu diesem in ihrer Neigung einstellbar ist. Die Anordnung der Lehnenschwenkachse definiert als axiale Richtung das nachfolgend verwendete Zylinderkoordinatensystem. Der Fahrzeugsitz 1 ist als Gurtintegralsitz ausgebildet, d.h. der obere Anbindungspunkt des Sicherheitsgurtes befindet sich an der Lehne 4, und im Crashfall werden auch Kräfte über die Lehne 4, die Beschlagsanordnung 5 und das Sitzteil 3 in die Fahrzeugstuktur abgeleitet. Während die Beschlagsanordnung 5 auf der vom Anbindungspunkt des Sicherheitsgurtes abgewandten Fahrzeugsitzseite einen herkömmlichen Einzelbeschlag aufweist, wie er bei Fahrzeugen mit einer Anbindung des Sicherheitsgurtes an der B-Säule zu Einsatz kommt, ist auf der Fahrzeugsitzseite mit dem Anbindungspunkt des Sicherheitsgurtes ein Beschlag 8 vorgesehen, der in einer nachfolgend beschriebenen Weise verstärkt ausgebildet ist.

Der Beschlag 8 ist als Doppelbeschlag ausgebildet, d.h. er besteht aus zwei für sich prinzipiell voll funktionsfähigen, ungleichen Einzelbeschlägen, welche axial nebeneinander und bezüglich des Kraftflusses parallel angeordnet sind. Dies verdoppelt ungefähr die maximale Belastbarkeit im Crashfall.

Der erste Einzelbeschlag 10 des Beschlags 8 hat einen guten Wirkungsgrad für die Neigungseinstellung der Lehne 4 und dient vorrangig dem Verstellen des Beschlags 8. Der erste Einzelbeschlag 10 weist ein erstes Beschlagoberteil 11 und ein erstes Beschlagunterteil 12 auf, welche mittels eines als (vorliegend nicht-spielfreien) Exzenterumlaufgetriebe ausgebildeten Getriebes zum Verstellen miteinander in Getriebeverbindung stehen. Die beiden ersten Beschlagteile 11 und 12 weisen eine im wesentlichen flache Scheibenform auf. Zur Ausbildung des Getriebes ist am ersten Beschlagunterteil 12 ein Zahnrad 16 mit einer Außenverzahnung und am ersten Beschlagoberteil 11 ein Zahnkranz 17 mit einer Innenverzahnung ausgeprägt, welche miteinander kämmen. Der Durchmesser des Kopfkreises der Außenverzahnung des Zahnrads 16 ist um wenigstens eine Zahnhöhe kleiner als der Durchmesser des Fußkreises der Innenverzahnung des Zahnkranzes 17. Der entsprechende Unterschied der Zähneanzahl von Zahnrad 16 und Zahnkranz 17 ermöglicht eine Abwälzbewegung des Zahnkranzes 17. relativ zum Zahnrad 16.

Das erste Beschlagoberteil 11 weist auf der dem Zahnrad 16 zugewandten Seite konzentrisch zur Innenverzahnung des Zahnkranzes 17 einen angeformten Kragenzug 19 auf. Entsprechend der WO 03/024740 A1, deren Offenbarungsgehalt ausdrücklich einbezogen wird, ist ein Mitnehmer 21 vorgesehen. Der zweiteilig aufgebaute Mitnehmer 21 besteht aus einer Mitnehmerbuchse 21a, welche mit Luft in den Kragenzug 19 hineinragt und welche im Zentrum ein Innenprofil zur Aufnahme einer profilierten Antriebswelle aufweist, und einem drehfest mit der Mitnehmerbuchse 21a verbundenen und außerhalb des Kragenzugs 19 angeordneten Mitnehmerring 21b. Der Mitnehmerring 21b definiert zusammen mit einem mondsichelförmigen Element, im folgenden kurz als Sichelelement 23 bezeichnet, einen Exzenter. Dabei wird das Sichelelement 23 in Umfangsrichtung von einem Mitnehmersegment 21c des Mitnehmerrings 21b mit Spiel gefasst. Der besagte Exzenter läuft durch eine Drehung der Antriebswelle (und damit des Mitnehmers 21) angetrieben in einer Gleitlagerbuchse 28 des zweiten Justier-Beschlagteils 12 um und bewirkt dadurch die relative Abwälzbewegung von Zahnkranz 17 und Zahnrad 16. Die Bewegung stellt sich als eine Relativdrehbewegung von erstem Beschlagoberteil 11 und erstem Beschlagunterteil 12 mit überlagerter Taumelbewegung dar. Im Bereich der maximalen Exzentrizität stützt sich der Mitnehmerring 21b am Kragenzug 19 ab. Der hohe Wirkungsgrad wird dadurch erreicht, dass der erste Einzelbeschlag 10. spielbehaftet, genauer gesagt mit Verzahnungsspiel, läuft und einen optimalen Tragpunkt für niedrige Lagerkräfte aufweist.

Für den axialen Zusammenhalt des ersten Einzelbeschlags 10 ist ein erster Umklammerungsring, im folgenden als erster Beschlagring 30 vorgesehen, welcher einerseits entlang des Außenumfangs des ersten Beschlagunterteils 12 angeordnet und mit diesem verbunden ist, beispielsweise aufgepresst und gegebenenfalls laserverschweißt ist, und andererseits das erste Beschlagoberteil 11 übergreift.

Während die Mitnehmerbuchse 21a vorzugsweise aus Kunststoff gefertigt ist, bestehen die anderen Bauteile des ersten Einzelbeschlags 10 vorzugsweise aus Metall, beispielsweise Stahl, gegebenenfalls gesintert, gehärtet oder anderweitig behandelt. Alternativ zum beschriebenen Aufbau können der Mitnehmerring 21b und das Sichelelement 23 als Festexzenter einstückig miteinander ausgebildet sein. Es ist auch möglich, dass der gesamte Mitnehmer 21 einteilig ausgebildet ist, oder dass der Mitnehmer 21 und das Sichelelement 23 durch einen einteiliger Festexzenter ersetzt sind.

Der Beschlag 8 weist einen zweiten Einzelbeschlag 50 auf, welcher besonders dem spielfreien Feststellen des Beschlags 8 im nicht-angetriebenen Ruhezustand dient, da der erste Einzelbeschlag 10 zur Spielfreistellung nicht geeignet ist. Der zweite Einzelbeschlag 50 ist mit einem zweiten Beschlagoberteil 51 und einem zweiten Beschlagunterteil 52, die mittels eines selbsthemmenden Exzenterumlaufgetriebes miteinander in Getriebeverbindung stehen, versehen und als ein Getriebebeschlag ausgebildet, welcher dem ersten Einzelbeschlag 10 - bis auf den Exzenter - gleicht. Das erste Beschlagoberteil 11 und das zweite Beschlagoberteil 51 einerseits und das erste Beschlagunterteil 12 und das zweite Beschlagunterteil 52 andererseits sowie die Gleitlagerbuchse 28 sind daher Gleichteile, ebenso wie der zweite Beschlagring 60 und der erste Beschlagring 30.

Der Mitnehmer 21, d.h. sowohl die Mitnehmerbuchse 21a als auch der Mitnehmerring 21b, ist im Ausführungsbeispiel in axialer Richtung so lang gebaut, dass er sich sowohl in den ersten Einzelbeschlag 10 als auch in den zweiten Einzelbeschlag 50 erstreckt und beidseitig gelagert ist. Alternativ ist der gesamte Mitnehmer 21 oder nur die Mitnehmerbuchse 21a oder nur der Mitnehmerring 21b in axialer Richtung zweigeteilt, wobei durch die Antriebswelle eine drehfeste Kopplung der zwei axial getrennten Teile der Mitnehmerbuchse 21a erfolgt.

Je nach Anforderung, insbesondere dem zur Verfügung stehenden Bauraum und der Art des Antriebs, sind der erste Einzelbeschlag 10 und der zweite Einzelbeschlag 50 in bestimmter Orientierung zueinander ausgerichtet. Die "inneren Beschlagteile", beispielsweise das erste Beschlagunterteil 12 und das zweite Beschlagunterteil 52, sind einander zugewandt und miteinander verbunden, beispielsweise durch einzelne Schweißpunkte, insbesondere Laserschweißpunkte, als Transportsicherung 63, während die "äußeren Beschlagteile", d.h. vorliegend das erste Beschlagoberteil 11 und das zweite Beschlagoberteil 51, voneinander abgewandt sind. Die Orientierung der beiden Einzelbeschläge kann auch genau umgekehrt sein.

Entsprechend der DE 44 36 101 A1 oder der DE 199 38 666 A1, deren Offenbarungsgehalte ausdrücklich einbezogen werden, bilden der Mitnehmer 21, genauer gesagt der Mitnehmerring 21b, und zwei gekrümmte Keilsegmente 73 den Exzenter des zweiten Einzelbeschlags 50. Dabei greift das Mitnehmersegment 21c mit Spiel zwischen die Schmalseiten der beiden Keilsegmente 73, während die einander zugewandten Breitseiten der Keilsegmente 73 durch eine ringförmig gebogene, abgewinkelte Endfinger aufweisende Feder, kurz als Omegafeder 75 bezeichnet, auseinander gedrückt werden. Der zweite Einzelbeschlag 50 wird dadurch im nicht-angetriebenen Ruhezustand spielfrei. Die durch die Geometrie- und ReibungsVerhältnisse bedingte Selbsthemmung sorgt für ein ausreichendes Sperrmoment des zweiten Einzelbeschlags 50.

Zur Anbindung des Beschlags 8 an das Sitzteil 3 einerseits und die Lehne 4 andererseits sind ein erster äußerer Adapter 81, ein zweiter äußerer Adapter 82 und ein innerer Adapter 83 vorgesehen. Die beiden äußeren Adapter 81 und 82 weisen beide senkrecht zur axialen Richtung eine ebene Grundform mit je einem Lagerauge 85 auf, von der am Rand Verbindungslaschen 87 axial abstehen können. Vorliegend stehen vom ersten äußeren Adapter 81 zwei Verbindungslaschen 87 ab, vom zweiten äußeren Adapter 82 keine. Die beiden äußeren Adapter 81 und 82 sind mittels der Verbindungslaschen 87 miteinander unter Bildung eines Hohlkastens zu verbinden. Der innere Adapter 83 weist eine Gabel 89 mit einer halbkreisförmigen Aufnahme auf. Für spezielle Hochlastfälle kann der innere Adapter 83 radial über die Mitte des Beschlags 8 hinaus verlängert sein und anstelle der Gabel 89 ein ringförmig von Material umgebenes, weiteres Lagerauge aufweisen.

Zur Anbringung der Adapter 81, 82 und 83 wird der Beschlag 8 von der Gabel 89 des inneren Adapters 83 aufgenommen und sodann der innere Adapter 83 fest mit den "inneren Beschlagteilen", vorliegend den Beschlagunterteilen 12 und 52, verbunden, vorzugsweise verschweißt. Dann werden die "äußeren Beschlagteile", vorliegend die Beschlagoberteile 11 und 51, mit den äußeren Adaptern 81 und 82 übergriffen, wobei vorzugsweise jeweils ein Absatz der "äußeren Beschlagteile" 11, 51 in je einem Lagerauge 85 zu liegen kommt, und schließlich die äußeren Adapter 81 und 82 direkt mit den jeweiligen "äußeren Beschlagteilen" 11, 51 und untereinander mittels der Verbindungslaschen 87 fest verbunden. Die Zuordnung zu Sitzteil 3 und Lehne 4 hängt vom Anwendungsfall ab. Die Verbindungslaschen 87 sind so weit von der Lehnenschwenkachse angeordnet, dass der innere Adapter 83 beim Vorschwenken der Lehne 4 zwischen die äußeren Adapter 81 und 82 eintauchen kann.

Besonders bevorzugt wegen der festen und daher guten Anbindungsmöglichkeit ist eine Anordnung von erstem Einzelbeschlag 10 und zweitem Einzelbeschlag 50, bei welcher der erste Beschlagring 30 und der zweite Beschlagring 60 mit den jeweils "inneren Beschlagteilen" 12, 52 verbunden sind, d.h. gemeinsam mit der Gabel 89 (oder dem Lagerauge) des inneren Adapters 83 verbunden werden können.

Auf der Außenseite des Beschlags 8 kann ein Handrad oder ein Elektromotor angeordnet sein, welches bzw. welcher die in den Mitnehmer 21 greifende Antriebswelle und damit beide Einzelbeschläge 10 und 50 synchron manuell bzw. motorisch antreibt. Der Elektromotor kann auch innerhalb eines oder beider Exzenter angeordnet sein.

### Bezugszeichenliste

- 1: Fahrzeugsitz
- 3: Sitzkissen
- 4: Lehne
- 5: Beschlagsanordnung
- 8: Beschlag
- 10: erster Einzelbeschlag
- 11: erstes Beschlagoberteil
- 12: erstes Beschlagunterteil
- 16: Zahnrad
- 17: Zahnkranz
- 19: Kragenzug
- 21: Mitnehmer
- 21a: Mitnehmerbuchse
- 21b: Mitnehmerring
- 21 c: Mitnehmersegment
- 23: Sichelelement
- 28: Gleitlagerbuchse
- 30: erster Beschlagring
- 50: zweiter Einzelbeschlag
- 51: zweites Beschlagoberteil
- 52: zweites Beschlagunterteil
- 60: zweiter Beschlagring
- 63: Transportsicherung
- 73: Keilsegment
- 75: Omegafeder
- 81: erster äußerer Adapter
- 82: zweiter äußerer Adapter
- 83: innerer Adapter
- 85: Lagerauge
- 87: Verbindungslasche
- 89: Gabel

## Patentansprüche

1. Beschlag für einen Fahrzeugsitz, insbesondere für einen Kraftfahrzeugsitz, mit zwei Einzelbeschlägen (10, 50), die axial nebeneinander und bezüglich des Kraftflusses parallel angeordnet sind und die jeweils wenigstens zwei relativ zueinander verdrehbare und mittels eines Exzenterumlaufgetriebes miteinander in Getriebeverbindung stehende Beschlagteile (11, 12, 51, 52) aufweisen, wobei der erste Einzelbeschlag (10) einen Exzenter ohne Spielfreistellung aufweist, **dadurch gekennzeichnet, dass** der zweite Einzelbeschlag (50) einen Exzenter mit Spielfreistellung aufweist.

2. Beschlag nach Anspruch 1, **dadurch gekennzeichnet, dass** der Exzenter des ersten Einzelbeschlags (10) durch ein Sichelelement (23) und/oder durch einen Mitnehmer (21), insbesondere einen Mitnehmerring (21b) des Mitnehmers (21) definiert wird oder ein einteiliger Festexzenter ist, bei dem das Sichelelement (23) und der Mitnehmer (21) einstückig miteinander ausgebildet sind.

3. Beschlag nach Anspruch 1 oder 2, **dadurch gekennzeichnet, dass** der Exzenter des zweiten Einzelbeschlags (50) durch zwei Keilsegmente (73) und/oder durch einen Mitnehmer (21), insbesondere einen Mitnehmerring (21b) des Mitnehmers (21) definiert wird.

4. Beschlag nach Anspruch 3, **dadurch gekennzeichnet, dass** die Keilsegmente (73) direkt zwischen den beiden Beschlagteilen (51, 52) des zweiten Einzelbeschlags (50) oder damit fest verbundenen Buchsen (28) gelagert sind.

5. Beschlag nach einem der vorhergehenden Ansprüche, **dadurch gekennzeichnet, dass** der erste Einzelbeschlag (10) und der zweite Einzelbeschlag (50) zum Antrieb einen gemeinsamen Mitnehmer (21) oder einen axial geteilten Mitnehmer (21), dessen axial getrennte Teile je einem Einzelbeschlag (10, 50) zugeordnet sind, aufweisen.

6. Beschlag nach Anspruch 5, **dadurch gekennzeichnet, dass** der gemeinsame Mitnehmer (21) in axialer Richtung so lang gebaut ist, dass er sich sowohl in den ersten Einzelbeschlag (10) als auch in den zweiten Einzelbeschlag (50) erstreckt und beidseitig gelagert ist.

7. Beschlag nach Anspruch 4 oder 5, **dadurch gekennzeichnet, dass** der Mitnehmer (21) eine Mitnehmerbuchse (21a) und einen drehfest mit der Mitnehmerbuchse (21a) verbundenen Mitnehmerring (21b) aufweist, welcher in wenigstens einem Einzelbeschlag (10, 50) gelagert ist.

8. Beschlag nach einem der vorhergehenden Ansprüche, **dadurch gekennzeichnet, dass** die Beschlagteile (11,12,40,51,52) wenigstens näherungsweise eine Scheibenform aufweisen, wobei jeweils ein Ring (30, 60) die Beschlagteile (11,12,40, 51, 52) eines jeden Einzelbeschlags (10, 50) axial zusammenhält.

9. Beschlag nach einem der vorhergehende Ansprüche, **dadurch gekennzeichnet, dass** eine Transportsicherung (63) vorgesehen ist, welche die beiden Einzelbeschläge (10, 50) direkt miteinander verbindet.

10. Beschlag nach einem der vorhergehenden Ansprüche, **dadurch gekennzeichnet, dass** jeder Einzelbeschlag (10, 50) je ein Beschlagunterteil (12, 52) und je ein Beschlagoberteil (11, 51) aufweist, wobei die bezüglich der axialen Anordnung jeweils äußeren Beschlagteile (11, 51) mittels eines oder mehrerer miteinander verbundener äußerer Adapter (81, 82) miteinander fest verbunden sind und/oder die jeweils inneren Beschlagteile (12, 52) mittels eines inneren Adapters (83) oder direkt miteinander fest verbunden sind.

11. Beschlag nach Anspruch 10, **dadurch gekennzeichnet, dass** die äußeren Adapter (81, 82) die äußeren Beschlagteile mittels je eines Lagerauges (85) aufnehmen und/oder dass der innere Adapter (83) die inneren Beschlagteile mittels einer Gabel (89) oder eines weiteren Lagerauges aufnimmt.

12. Fahrzeugsitz, insbesondere Gurtintegralsitz oder Rücksitzanlage in zweiter oder dritter Sitzreihe, mit einem Sitzteil (3), wenigstens einer Lehne (4) und einer Beschlagsanordnung (5), mittels derer die Lehne (4) in ihrer Neigung einstellbar ist und die einen Beschlag (8) nach einem der vorhergehenden Ansprüche aufweist.

## Claims

1. A fitting for a vehicle seat, in particular for a motor vehicle seat, with two individual fittings (10, 50) which are arranged axially next to each other and parallel in relation to the flow of force and which each have at least two fitting parts (11, 12, 51, 52) which can be rotated relative to each other and are mechanically interlinked by means of an eccentric epicyclic gear, the first individual fitting (10) having an eccentric with backlash, **characterized in that** the second individual fitting (50) has an eccentric with zero backlash.

2. The fitting as claimed in claim 1, **characterized in that** the eccentric of the first individual fitting (10) is defined by a sickle element (23) and/or by a driver (21), in particular a driving ring (21b) of the driver (21), or is a single-part fixed eccentric in which the sickle element (23) and the driver (21) are formed as a single piece with each other.

3. The fitting as claimed in claim 1 or 2, **characterized in that** the eccentric of the second individual fitting (50) is defined by two wedge segments (73) and/or by a driver (21), in particular a driving ring (21 b) of the driver (21).

4. The fitting as claimed in claim 3, **characterized in that** the wedge segments (73) are mounted directly between the two fitting parts (51, 52) of the second individual fitting (50) or between bushings (28) connected fixedly thereto.

5. The fitting as claimed in one of the preceding claims, **characterized in that** the first individual fitting (10) and the second individual fitting (50) have, for the drive, a common driver (21) or an axially divided driver (21), the axially separated parts of which are each assigned to an individual fitting (10, 50).

6. The fitting as claimed in claim 5, **characterized in that** the common driver (21) is constructed to be of such a length in the axial direction that it extends both into the first individual fitting (10) and into the second individual fitting (50) and is mounted on both sides.

7. The fitting as claimed in claim 4 or 5, **characterized in that** the driver (21) has a driving bushing (21a) and a driving ring (21b) which is connected to the driving bushing (21a) in a rotationally fixed manner and is mounted in at least one individual fitting (10, 50).

8. The fitting as claimed in one of the preceding claims, **characterized in that** the fitting parts (11, 12, 40, 51, 52) are at least approximately in disk form, with a respective ring (30, 60) axially holding together the fitting parts (11, 12, 40, 51, 52) of each individual fitting (10, 50).

9. The fitting as claimed in one of the preceding claims, **characterized in that** a transport securing means (63) is provided which connects the two individual fittings (10, 50) directly to each other.

10. The fitting as claimed in one of the preceding claims, **characterized in that** each individual fitting (10, 50) has a lower fitting part (12, 52) and an upper fitting part (11, 51), the respectively outer fitting parts (11, 51) with respect to the axial arrangement being connected fixedly to each other by means of one or more interconnected outer adaptors (81, 82), and/or the respectively inner fitting parts (12, 52) being fixedly connected to each other by means of an inner adaptor (83) or directly.

11. The fitting as claimed in claim 10, **characterized in that** the outer adaptors (81, 82) receive the outer fitting parts by means of a respective bearing eye (85), and/or the inner adaptor (83) receives the inner fitting parts by means of a fork (89) or a further bearing eye.

12. A vehicle seat, in particular seat with an integral belt or rear seat system in a second or third row of seats, with a seat part (3), at least one back rest (4) and a fitting arrangement (5) by means of which the back rest (4) can be adjusted in its inclination and which has a fitting (8) as claimed in one of the preceding claims.

## Revendications

1. - Armature pour un siège de véhicule, en particulier pour un siège de véhicule automobile, comportant deux armatures individuelles (10, 50), qui sont disposées l'une à côté de l'autre axialement et parallèlement par rapport au flux de force et qui présentent chacune au moins deux parties d'armature (11, 12, 51, 52) pouvant tourner l'une par rapport à l'autre et s'engrenant l'une dans l'autre au moyen d'un engrenage planétaire à excentrique, la première armature individuelle (10) présentant un excentrique sans élimination du jeu, **caractérisée par le fait que** la deuxième armature individuelle (50) présente un excentrique avec élimination du jeu.

2. - Armature selon la revendication 1, **caractérisée par le fait que** l'excentrique de la première armature individuelle (10) est défini par un élément en faucille (23) et/ou par un élément d'entraînement (21), en particulier une bague d'entraînement (21b) de l'élément d'entraînement (21), ou est un excentrique solide d'une seule pièce, pour lequel l'élément en faucille (23) et l'élément d'entraînement (21) sont formés d'une seule pièce l'un avec l'autre.

3. - Armature selon l'une des revendications 1 ou deux, **caractérisée par le fait que** l'excentrique de la deuxième armature individuelle (50) est défini par deux segments de coin (73) et/ou par un élément d'entraînement (21), en particulier une bague d'entraînement (21b) de l'élément d'entraînement (21).

4. - Armature selon la revendication 3, **caractérisée par le fait que** les segments de coin (73) sont montés directement entre les deux parties d'armature (51, 52) de la deuxième armature individuelle (50) ou des douilles (28) solidement reliées avec elles.

5. - Armature selon l'une des revendications précédentes, **caractérisée par le fait que** la première armature individuelle (10) et la deuxième armature individuelle (50) présentent pour l'entraînement un élément d'entraînement commun (21) ou un élément d'entraînement (21) partagé axialement, dont les parties partagées axialement sont associées chacune à une armature individuelle (10, 50).

6. - Armature selon la revendication 5, **caractérisée par le fait que** l'élément d'entraînement commun (21) est réalisé dans la direction axiale suffisamment long pour s'étendre non seulement dans la première armature individuelle (10), mais encore dans la deuxième armature individuelle (50), et être supporté des deux côtés.

7. - Armature selon l'une des revendications 4 ou 5, **caractérisée par le fait que** l'élément d'entraînement (21) présente une douille d'entraînement (21a) et une bague d'entraînement (21b) reliée de façon solidaire en rotation avec la douille d'entraînement (21a), bague qui est montée dans au moins une armature individuelle (10, 50).

8. - Armature selon l'une des revendications précédentes, **caractérisée par le fait que** les parties d'armature (11, 12, 40, 51, 52) présentent au moins approximativement une forme de disque, une bague (30, 60) tenant ensemble axialement respectivement les parties d'armature (11, 12, 40, 51, 52) de chaque armature individuelle (10, 50).

9. - Armature selon l'une des revendications précédentes, **caractérisée par le fait qu'**une sécurité (63) pour le transport est prévue, laquelle relie directement l'une avec l'autre les deux armatures individuelles (10, 50).

10. - Armature selon l'une des revendications précédentes, **caractérisée par le fait que** chaque armature individuelle (10, 50) présente à chaque fois une partie inférieure d'armature (12, 52) et une partie supérieure d'armature (11, 51), les parties d'armature (11, 51) extérieures respectives par rapport à la disposition axiale étant reliées solidement l'une avec l'autre au moyen d'un ou plusieurs adaptateurs extérieurs (81, 82) reliés l'un avec l'autre et/ou les parties d'armature respectivement intérieures (12, 52) étant reliées solidement l'une avec l'autre au moyen d'un adaptateur intérieur (83) ou directement.

11. - Armature selon la revendication 10, **caractérisée par le fait que** les adaptateurs extérieurs (81, 82) reçoivent les parties d'armature extérieures au moyen à chaque fois d'un oeillet de montage (85) et/ou que l'adaptateur intérieur (83) reçoit les parties d'armature intérieures au moyen d'une fourche (89) ou d'un autre oeillet de montage.

12. - Siège de véhicule, en particulier siège avec ceinture de sécurité intégrée ou installation de siège arrière en deuxième ou troisième rangée de sièges, avec une partie de siège (3), au moins un dossier (4) et un dispositif d'armature (5), au moyen duquel le dossier (4) est réglable dans son inclinaison et qui présente une armature (8) selon l'une des revendications précédentes.
